# EUROPÄISCHE PATENTSCHRIFT

(11) **EP 1 049 605 B1**
(45) Veröffentlichungstag und Bekanntmachung des Hinweises auf die Patenterteilung: **31.07.2002**
(21) Anmeldenummer: 98963326.8
(22) Anmeldetag: 05.11.1998
(51) Int. Cl.: B60R 16/00

(54) **STOCKSCHALTER, INSBESONDERE LENKSTOCKSCHALTER FÜR KRAFTFAHRZEUGE**
STICK SHIFT, ESPECIALLY A STEERING COLUMN SWITCH FOR MOTOR VEHICLES
INTERRUPTEUR A BATON, NOTAMMENT INTERRUPTEUR SUR COLONNE DE DIRECTION DESTINE A DES VEHICULES

(30) Priorität: 30.01.1998 DE 19803693
(43) Veröffentlichungstag der Anmeldung: 08.11.2000
(73) Patentinhaber: TRW Automotive Electronics & Components GmbH & Co. KG, 78315 Radolfzell (DE)
(72) Erfinder: STEWART, Trevor, Houghton-Le-Spring DH5 8JE (GB); ROBSON, Thomas, East Rainton, Houghton-Le-Spring DH5 9QS (GB); HUMES, Steven, Houghton-Le-Spring DH5 8LR (GB)
(74) Vertreter: Eder, Christian, Dipl.-Ing.
(86) Internationale Anmeldenummer: DE9803230
(87) Internationale Veröffentlichungsnummer: WO9938729

(56) Entgegenhaltungen:
- WO-A-96/23677
- DE-A- 4 219 057
- FR-A- 2 574 217
- US-A- 5 313 029

## Beschreibung

Die Erfindung betrifft einen Stockschalter, insbesondere Lenkstockschalter für Kraftfahrzeuge.

Ein Lenkstockschalter besteht im Allgemeinen aus einem Schaltergehäuse, in welchem ein stockförmiges Betätigungselement schwenkbar gelagert ist Im Gehäuse sind erste Rastmittel vorgesehen, welche mit am Ende des Betätigungshebels vorgesehenen zweiten Rastmitteln zur Definition von Schaltstellungen zusammenwirken. Sind nur Tippfunktionen gewünscht, so kann über eine entsprechende Rastkurve auch lediglich eine Rückstellung des Schalterhebels in eine Ausgangsstellung erfolgen. Ein derartiger Schalter ist beispielsweise aus der EP-B-0 601 462 und der WO 96/23677 bekannt.

Um die Lagerhaltungskosten zu reduzieren und die Flexibilität bei der Auswahl der Schalterfunktionen eines Lenkstockschalters zu verbessern, wird in der nicht vorveröffentlichten deutschen Patentanmeldung 196 49 912 ein Modul-Lenkstockschalter beschrieben, dessen Schalitionen allein durch den Austausch des Schalthebels veränderbar sind.

Darüber hinaus ist aus der US-A 5,313,029 ein Stockschalter für ein KFZ bekannt, bei dem das stockförmige Betätigungselement in üblicher Weise für das Auslösen von Schaltfunktionen schwenkbar oder rotierbar in einem Schaltergehäuse gehalten ist. In dem stockförmigen Teil ist am freien Ende eine austauschbare Schalteinheit gehalten, mit welcher zusätzliche Schaltfünktionen realisierbar sind. Die Schalteinheit umfasst eine Grundplatte, durch welche Kontaktstifte für das elektrische Kontaktieren und mechanische Halten der Schalteinheit in dem stockförmigen Teil ragen.

Zusätzlich zu einer möglichst hohen Flexibilität bei der Auswahl der Schaltfunktionen, beispielsweise für verschiedene KFZ-Typen, stellt sich in der Praxis häufig das Problem, dass im Bereich der Lenksäule eines KFZ, also im Bereich des Montageorts eines Lenkstockschalters, nur ein sehr begrenzter Raum für die Montage des Lenkstockschalters zur Vertügung steht.

Insbesondere durch den in letzter Zeit anhaltenden Trend, am Lenkstockschalter immer mehr Funktionen, ggf. auch in Form zusätzlicher Tast- oder Drehschalter vorzusehen, tritt das Problem des eng begrenzten Montageraums immer mehr in den Vordergrund.

Der vorliegenden Erfindung liegt daher die Aufgabe zugrunde, einen Stockschalter, insbesondere Lenkstockschalter für Kraftfahrzeuge, zu schaffen, welcher im Bereich des Montageorts nur einen äußerst geringen Raumbedarf beansprucht und zudem eine möglichst hohe Flexibilität bei der Auswahl der Schaltfunktionen ermöglicht.

Die Erfindung löst diese Aufgabe mit den Merkmalen des Patentanspruchs 1. Die Erfindung geht von der Erkenntnis aus, dass der minimale Platzbedarf zur Montage eines Schalters dann erreicht wird, wenn am Montageort lediglich eine elektrische Verbindung zwischen dem Stockschalter und den mit dem Schalter zu verbindenden Schaltkreisen bzw. Verbrauchern hergestellt wird.

Erfindungsgemäß wird daher der Weg beschritten, sämtliche Schaltfunktionen bzw. die hierfür erforderliche Mechanik und/oder elektrischen bzw. elektronischen Bauelemente außerhalb des Montagebereichs des Stockschalters im Aufnahmeteil zu platzieren. Der erfindungsgemäße Stockschalter weist hierzu ein im Wesentlichen stockförmiges Teil auf, in dessen Einsteckbereich elektrische Anschlusskontakte zur Übertragung der Schaltfunktionen an das Aufnahmeteil vorgesehen sind. Mit dem stockförmigen Teil ist ein damit zur Betätigung von Schaltfunktionen schwenkbar und/oder verschiebbar gelagertes Betätigungsteil verbunden. Zur Montage des Stockschalters wird dieser mit dem Einsteckbereich lediglich in eine entsprechende Aufnahme im Aufnahmelement, beispielsweise der Lenksäule, eingesteckt und mit dieser unlösbar oder lösbar verriegelt.

Auf diese Weise ergibt sich der Vorteil eines minimalen Platzbedarfs im Montagebereich des Aufnahmeelements. Nach der bevorzugten Ausführungsform der Erfindung umgreift das Betätigungsteil das stockförmige Teil zumindest im äußeren Bereich des dem Einsteckbereich abgewandten Endes und bildet ein Gehäuse zur Aufnahme der Mechanik fiir die Schaltfunktionen.

Umgekehrt ist es jedoch selbstverständlich ebenfalls möglich, beispielsweise das stockförmige Teil im Bereich des dem Einsteckbereich abgewandten Endes zu einem Gehäuse zur Aufnahme der Mechanik für die Schaltfunktionen zu erweitern.

Auch eine Kombination dieser Möglichkeiten könnte dann angezeigt sein, wenn das Gehäuse im Querschnitt relativ eng bemessen sein soll oder wenn entsprechend viele Schaltfunktionen integriert werden sollen.

Bei der bevorzugten Ausführungsform der Erfindung weist das Betätigungsteil ein Kopfteil auf, welches als Gehäuse bzw. Gehäusedeckel für die Mechanik der erforderlichen weiteren Schaltfunktionen wirkt.

Hierdurch ist es möglich, allein durch die unterschiedliche Ausbildung des Kopfteils entsprechende weitere Schaltfunktionen zu realisieren.

Bei der bevorzugten Ausführungsform der Erfindung ist im Betätigungsteil eine Platine zur Zusammenfassung der elektrischen Schaltfunktionen des Stockschalters und bedarfsweise der weiteren Schaltfunktionen vorgesehen.

Vorzugsweise ist die Platine so gestaltet, dass eine vorbestimmte Maximalzahl von Schaltfunktionen bzw. bestimmte verschiedenartige Schaltfunktionen realisierbar sind. Zur Auswahl der gewünschten Schaltfunktionen müssen dann lediglich die entsprechende Mechanik, vorzugsweise im Kopfteil des Betätigungsteils, vorgesehen und die Anschlusskontakte mit an der Platine verbunden werden.

Bei der bevorzugten Ausführungsform der Erfindung sind die erforderlichen elektrischen Anschlüsse durch eine zumindest teilweise flexible Verbindungsleitung mit den elektrischen Anschlusskontakten im Einsteckbereich des Stockschalters verbunden.

Vorteilhafterweise werden die Anschlusskontakte des Stockschalters durch das Einstecken in das Aufnahmeteil mit einer Auswerte- und Steuereinheit verbunden, welche, abhängig von den Schaltstellungen bzw. Schaltaktionen der einzelnen Schaltmechaniken, die gewünschten Schaltfunktionen realisiert. Die Auswerte- und Steuereinheit kann in einem separaten, im oder am Aufnahmeteil befestigbaren Gehäuse vorgesehen und zur Aufnahme des Einsteckbereichs des stockförmigen Teils ausgebildet sein.

Die Haltemittel für die Montage des Stockschalters im Aufhahmeteil können so ausgebildet sein, dass diese ein Entriegeln bzw. einfaches Demontieren des Stockschalters ermöglichen. Damit ergibt sich der Vorteil einer einfachen Austauschbarkeit des Stockschalters bei einem Defekt bzw. eine einfache Nachrüstbarkeit auf zusätzliche Schaltfunktionen.

Weitere Ausführungsformen der Erfindung ergeben sich aus den Unteransprüchen.
Die Erfindung wird nachstehend anhand eines in der Zeichnung dargestellten Ausführungsbeispiels näher erläutert. In der Zeichnung zeigen:
- Fig. 1: eine Seitenansicht eines Stockschalters nach der Erfindung;
- Fig. 2: einen Längsschnitt durch den Stockschalter in Fig. 1 entlang der Linie A-A;
- Fig. 3: eine Seitenansicht aus einer gegenüber Fig. 1 senkrechten Richtung und
- Fig. 4: einen weiteren Längsschnitt entlang der Linie B-B in Fig. 3.

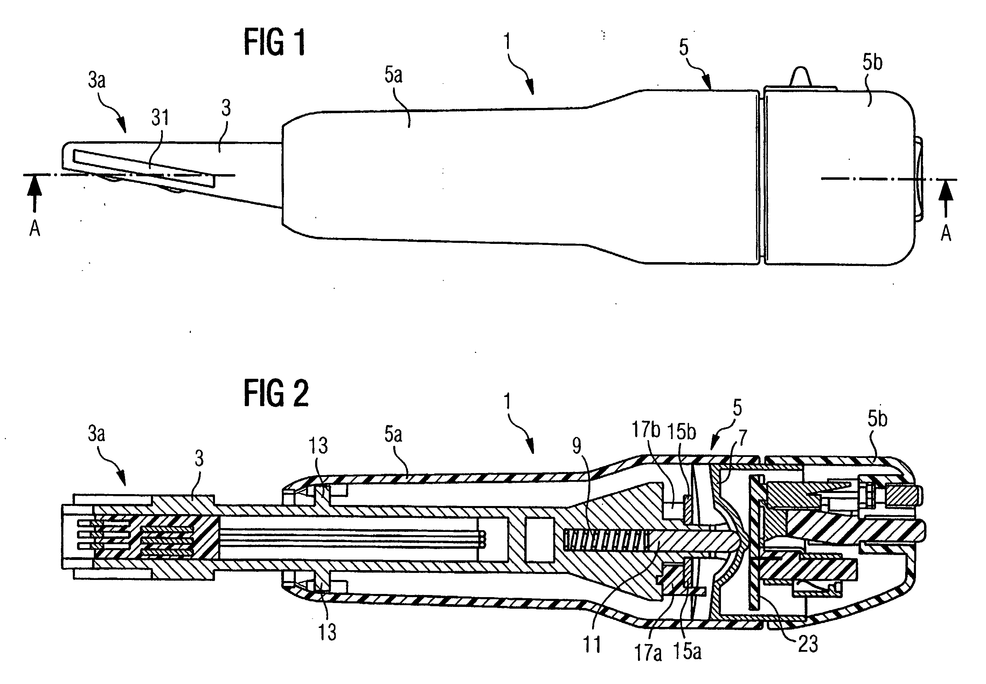

Der in Fig. 1 dargestellte Stockschalter 1 umfasst ein stockförmiges Teil 3, welches in ein Betätigungsteil 5 eingreift. Das Betätigungsteil 5 umfasst seinerseits das stockförmige Teil 3 und bildet ein Gehäuse zur Aufnahme sämtlicher Schaltfunktionen.

Das Betätigungsteil 5 besteht aus einem ersten Teil 5a, in welchem insbesondere ein Rastelement 7 fest angeordnet ist. Wie aus Fig. 2 ersichtlich, weist das dargestellte Rastelement 7 lediglich eine einzige Raststellung auf, so dass mit dem dargestellten Stockschalter mittels des Betätigungsteils 5 nur Tippfunktionen realisierbar sind. Zur Definition der Raststellungen greift in das Rastelement 7 greift ein mittels einer Feder 9 beaufschlagter Raststößel 11 ein.

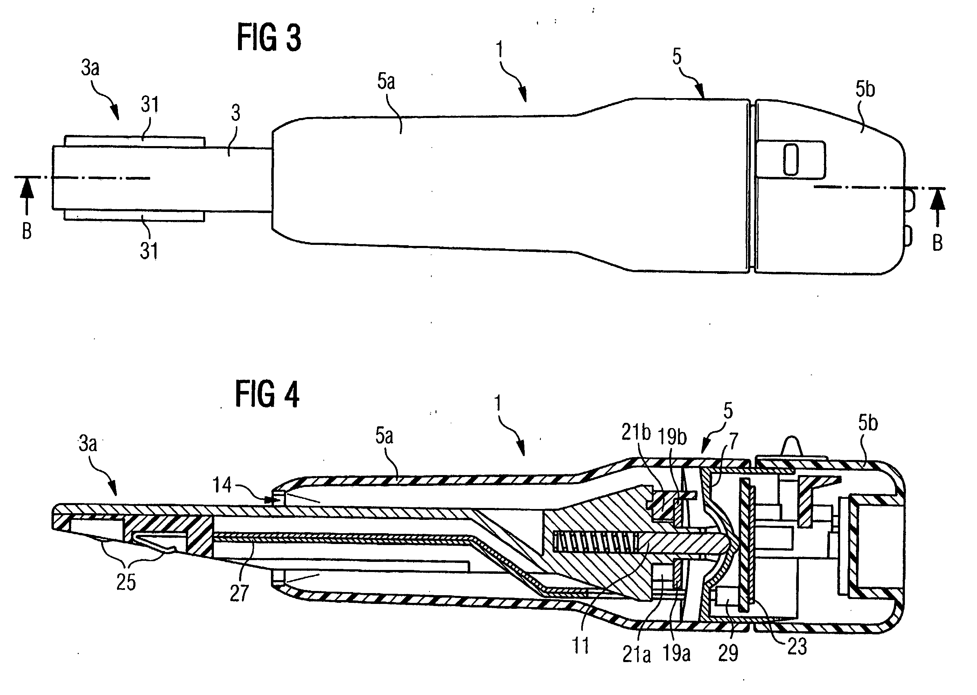

Bei einem Verschwenken des Betätigungsteils 5 in einer Richtung senkrecht zur Zeichenebene in Fig. 2 dienen am stockförmigen Teil 3 vorgesehene Zapfen zur Führung der Relativbewegung zwischen dem stockförmigen Teil 3 und dem Betätigungsteil 5. Die Schwenkachse wird durch eine nicht näher erläuterte Mechanik im Bereich der Position des Raststößels 11 entlang des Betätigungsteils 5 definiert. Um ein Verschwenken in dieser Richtung nicht zu blockieren, muss, wie in Fig. 4 dargestellt, die Eingriffsöffnung 14 im Betätigungsteil 5, durch welche das stockförmige Teil 3 ragt, in der Richtung senkrecht zur Drehachse mit einem entsprechenden Spiel versehen sein.

Bei einem Verschwenken des Betätigungsteils 5 in dieser Richtung wird jeweils einer der Kontakte 15a, 15b gegenüber einem nicht näher dargestellten, auf jeweils einem Trägerteil 17a, 17b dargestellten Gegenkontakt verschoben. Hierdurch wird ein entsprechendes Öffnen bzw. Schließen eines Kontakts erreicht.

In entsprechender Weise wird bei einem Verschwenken des Betätigungsteils 5 in einer Richtung senkrecht zur Zeichenebene in Fig. 4 jeweils einer der weiteren Kontakte 19a, 19b gegenüber einem jeweils auf einem weiteren Trägerteil 21a, 21b vorgesehenen Gegenkontakt verschoben und in entsprechender Weise eine Schaltfunktion ausgelöst. Die Drehachse wird hierbei jeweils durch einen der Zapfen 13 definiert, welche zu diesem Zweck eine zur Längsachse des stockförmigen Teils 3 leicht schräg verlaufende Außenfläche aufweisen.

Im äußeren Ende des Betätigungsteils 5 ist eine Platine 23 vorgesehen, welche zur Verdrahtung der Schaltfunktionen dient. Vorzugsweise alle Schaltkontakte sind mit dieser Platine 23 kontaktiert.
Dies gilt auch für weitere Schaltfunktionen, die in diesem Bereich im Betätigungsteil 5 integriert sein können. Hierbei kann es sich beispielsweise um zusätzliche separate Tast- oder Drehschalter handeln.

Dieser Bereich ist durch ein Kopfteil 5b des Betätigungsteils 5 abgedeckt, bzw. das Kopfteil 5b dient gleichzeitig als Aufnahme- und Montageteil für die zusätzlichen Schalter.

Durch die bevorzugende zentrale Zusammenfassung aller elektrischen Kontakte sämtlicher Schalter bzw. Schalterfunktionen ergibt sich der Vorteil, dass durch eine oder mehrere elektrische Verbindungsleitungen zwischen der Platine 23 und Anschlusskontakten 25 des Stockschalters eine einfache Kontaktierung ermöglicht wird.

Wie aus Fig. 4 ersichtlich, können beispielsweise zwei separate Leitungsbänder 27 vorgesehen sein, die mittels eines oder mehrerer Stecker 29 mit der Platine 23 verbunden werden können. Die Anschlusskontakte 25 sind in einem sich einseitig konisch verjüngenden Einsteckbereich 3a des stockförmigen Teils 3 im Bereich der schrägen Seite ausgebildet. Die Anschlusskontakte 25 sind zu zwei Gruppen zusammengefasst, wobei jede in axialer Richtung versetzt liegende Gruppe mit einem der beiden Leitungsbänder 27 mit der Platine 23 verbunden wird.

Die Anschlusskontakte sind als Schleifkontakte ausgebildet, so dass bei einem Einschieben des Stockschalters 1 mit seinem Einsteckbereich 3 in ein nicht näher dargestelltes Aufnahmeelement eine sichere Kontaktierung mit entsprechenden Gegenkontakten erreicht wird.
Im Einsteckbereich 3a können, wie aus den Fig. 1 und 3 ersichtlich, seitlich verlaufende Führungsrippen 31 vorgesehen sein. Diese dienen zum einen zur Führung bei einem Einschieben des Stockschalters in das Aufnahmeteil und zum andern zur Verdrehsicherung. Gleichzeitig können die Führungsrippen 31 zur Verriegelung des Stockschalters im Aufnahmeteil dienen, wobei beispielsweise ein entsprechender Riegel hinter die rückwärtige Kante der Führungsrippen 31 eingreift.

Mit dem erfindungsgemäßen Stockschalter wird somit der Vorteil eines minimalen Platzbedarfs im Einsteckbereich bzw. Montagebereich im Aufnahmeteil erreicht. Zudem gewährleistet der Stockschalter die äußerst einfache Montage und ggf. erforderliche Demontage für einen Austausch bei Defekt oder für das Nachrüsten zusätzlicher Schaltfunktionen.

Durch das Vorsehen sämtlicher gegenüber den eigentlichen Schaltfunktionen des Stockschalters (durch die Betätigung des Betätigungsteils definiert) zusätzlicher Schaltfunktionen im Bereich eines Kopfteils des Betätigungsteils 5 ergibt sich der Vorteil eines modularen Aufbaus, wobei zur Veränderung der zusätzlichen Schaltfunktionen lediglich die entsprechende Mechanik im Kopfteil integriert und ggf. das Kopfteil abgeändert werden muss.

Der Stockschalter kann in nicht dargestellter Weise auch so ausgebildet sein, dass der Einsteckbereich des stockförmigen Teils in eine entsprechende Aufnahme in einem separaten Gehäuse eingreift, welches am oder im Aufnahmeteil, beispielsweise an einer Lenksäule, befestigbar ist. Das Gehäuse weist dann Anschlusskontakte für die Verbindung mit entsprechenden Verbraucher oder einer weiteren zentralen Steuereinheit oder zum Anschluss eines Bussystems auf. In diesem Gehäuse kann gleichzeitig die erforderliche Elektronik zur Verarbeitung bzw. Umsetzung der Signale des Stockschalters, einschließlich der Signale der am Stockschalter vorgesehenen zusätzlichen Schalter vorgesehen sein.

## Patentansprüche

1. Stockschalter, insbesondere Lenkstockschalter für Kraftfahrzeuge,
a) mit einem in ein Aufnahmeteil einsteckbaren, im Wesentlichen stockförmigen Teil (3), in dessen Einsteckbereich (3a) elektrische Anschlusskontakte (25) zur Übertragung der Schaltfunktionen an das Aufnahmeteil vorgesehen sind, und
b) einem in oder an dem stockförmigen Teil (3) zur Betätigung von Schaltfunktionen schwenkbar und/oder verschiebbar gelagerten Betätigungsteil (5), wobei die Mechanik zur Realisierung der Schaltfunktionen außerhalb des Einsteckbereichs (3a) des stockförmigen Teils (3) vorgesehen ist.

2. Stockschalter nach Anspruch 1, **dadurch gekennzeichnet, dass** das Betätigungsteil (5) das stockförmige Teil (3) zumindest den äußeren Bereich des dem Einsteckbereich (3a) abgewandten Endes umgreift und ein Gehäuse oder Teil eines Gehäuses zur Aufnahme der Mechanik für die Schaltfünktionen bildet.

3. Stockschalter nach Anspruch 1 oder 2, **dadurch gekennzeichnet, dass** sich das stockförmige Teil (3) im Bereich des dem Einsteckbereich (3a) abgewandten Endes zu einem Gehäuse zur Aufnahme der Mechanik für die Schaltfunktionen erweitert.

4. Stockschalter nach Anspruch 2 oder 3, **dadurch gekennzeichnet, dass** in dem Gehäuse zusätzlich zu den Schaltfunktionen des eigentlichen Stockschalters (1) weitere Schaltfunktionen integriert sind, welche mittels am stockförmigen Teil (3) und/oder am Betätigungsteil (5) vorgesehener zusätzlicher Betätigungselemente auslösbar sind.

5. Stockschalter nach einem der vorhergehenden Ansprüche, **dadurch gekennzeichnet, dass** das Betätigungsteil (5) als zumindest zweiteiliges Teil ausgebildet ist, wobei ein Kopfteil (5b) vorgesehen ist, welches ein Gehäuse zumindest für die Mechanik von vorbestimmten weiteren Schalfunktionen bildet.

6. Stockschalter nach einem der vorhergehenden Ansprüche, **dadurch gekennzeichnet, dass** im Betätigungsteil (5) eine Platine (23) zur Zusammenfassung der elektrischen Schaltfunktionen des Stockschalters (1) und bedarfsweise der weiteren Schaltfunktionen vorgesehen ist.

7. Stockschalter nach Anspruch 6, **dadurch gekennzeichnet, dass** die erforderlichen elektrischen Anschlüsse der Kontakte (15a, 15b, 17a, 17b) zur Realisierung der Schaltfunktionen des Stockschalters (1) und der weiteren Schaltfunktionen durch eine zumindest teilweise flexible Verbindungsleitung (27) mit den elektrischen Anschlusskontakten (25) im Einsteckbereich (3a) des Stockschalters (1) verbunden sind.

8. Stockschalter nach einem der vorhergehenden Ansprüche, **dadurch gekennzeichnet, dass** im Aufnahmeteil oder an einem beliebigen anderen Ort eine Auswerte- und Steuereinheit vorgesehen ist, welche Steuerströme und/oder Schaltstellungen der Schaltkontakte im stockförmigen Teil (3) und/oder Betätigungsteil (5) auswertet und vorbestimmte Schaltfunktionen realisiert.

9. Stockschalter nach Anspruch 8, **dadurch gekennzeichnet, dass** die Auswerte- und Steuereinheit in einem separaten, am oder im Aufnahmeteil befestigbaren Gehäuse vorgesehen ist, welches zur Aufnahme des Einsteckbereichs (9a) des stockförmigen Teils (3) ausgebildet ist.

10. Stockschalter nach einem der vorhergehenden Ansprüche, **dadurch gekennzeichnet, dass** am Einsteckbereich (3a) erste Haltemittel (31) vorgesehen sind, die mit im Aufnahmeteil vorgesehenen zweiten Haltemitteln zur im Wesentlichen starren Halterung und bedarfsweise Verriegelung des Stockschalters (1) im Aufnahmeteil zusammenwirken.

11. Stockschalter nach einem der vorhergehenden Ansprüche, **dadurch gekennzeichnet, dass** im Einsteckbereich (3a) Mittel zur Führung und Verdrehsicherung und Halterung des Stockschalters (1) im Aufnahmeteil vorgesehen sind.

## Claims

1. Stick shift, especially steering column switch for motor vehicles,
a) having an essentially stick-shaped part (3) which can be plugged into a receptacle part and in whose plug-in region (3a) electrical connecting contacts (25) for transmitting the switching functions to the receptacle part are provided, and
b) an activation part (5), which is pivotably and/or displaceably mounted in or on the stick-shaped part (3) for activating switching functions, the mechanical parts for implementing the switching functions being provided outside the plug-in region (3a) of the stick-shaped part (3).

2. Stick shift according to Claim 1, **characterized in that** the activation part (5) engages around the stick-shaped part (3) at least around the outer region of the end facing away from the plug-in region (3a), and forms a housing or part of a housing for holding the mechanical parts for the switching functions.

3. Stick shift according to Claim 1 or 2, **characterized in that** the stick-shaped part (3) widens in the region of the end facing away from the plug-in region (3a), to form a housing for holding the mechanical parts for the switching functions.

4. Stick shift according to Claim 2 or 3, **characterized in that** further switching functions, which can be triggered by means of additional activation elements provided on the stick-shaped part (3) and/or on the activation part (5), are integrated in the housing in addition to the switching functions of the actual stick shift (1).

5. Stick shift according to one of the preceding claims, **characterized in that** the activation part (5) is embodied as an at least two-component part, a head component (5b) which forms a housing at least for the mechanical parts of predetermined further switching functions being provided.

6. Stick shift according to one of the preceding claims, **characterized in that** a printed circuit board (23) for combining the electrical switching functions of the stick shift (1) and, if necessary, of the further switching functions is provided in the activation part (5).

7. Stick shift according to Claim 6, **characterized in that** the necessary electrical connections of the contacts (15a, 15b, 17a, 17b) for implementing the switching functions of the stick shift (1) and of the further switching functions are connected to the electrical connecting contacts (25) in the plug-in region (3a) of the stick shift (1) by means of an at least partially flexible connecting line (27).

8. Stick shift according to one of the preceding claims, **characterized in that** an evaluation and control unit which evaluates control currents and/or switched settings of the switching contacts in the stick-shaped part (3) and/or activation part (5) and implements predetermined switching functions is provided in the receptacle part or at any other desired location.

9. Stick shift according to Claim 8, **characterized in that** the evaluation and control unit is provided in a separate housing which can be attached to the or in the receptacle part and which is designed to hold the plug-in region (9a) of the stick-shaped part (3).

10. Stick shift according to one of the preceding claims, **characterized in that** first securing means (31) are provided on the plug-in region (3a), said securing means (31) interacting with second securing means provided in the receptacle part in order to secure in an essentially rigid fashion, and if necessary lock, the stick shift (1) in the receptacle part.

11. Stick shift according to one of the preceding claims, **characterized in that** means for guiding and preventing rotation of and securing the stick shift (I) are provided in the plug-in region (3a) in the receptacle part.

## Revendications

1. Interrupteur en forme de bâton, en particulier interrupteur sur colonne de direction pour véhicules automobiles,
a) avec une partie (3) essentiellement en forme de bâton, enfichable dans une partie de réception, dans la zone enfichable (3a) duquel sont prévus des contacts de connexion électrique (25) pour la transmission des fonctions de commutation à la partie de réception, et
b) une partie d'actionnement (5) logée de façon pivotante et/ou déplaçable pour l'actionnement des fonctions de commutation dans ou sur la partie en forme de bâton (3), tandis que la partie mécanique pour la réalisation des fonctions de commutation est prévue à l'extérieur de la zone enfichable (3a) de la partie en forme de bâton (3).

2. Interrupteur en forme de bâton selon la revendication 1, **caractérisé en ce que** la partie d'actionnement (5) enserre la partie en forme de bâton (3), pour le moins la zone extérieure de l'extrémité détournée de la zone enfichable (3a) et forme un logement ou une partie d'un logement pour recevoir la partie mécanique pour les fonctions de commutation.

3. Interrupteur en forme de bâton selon la revendication 1 ou 2, **caractérisé en ce que** la partie en forme de bâton (3) s'élargit dans la zone de l'extrémité détournée de la zone enfichable (3a) en un logement permettant de recevoir la partie mécanique pour les fonctions de commutation.

4. Interrupteur en forme de bâton selon la revendication 2 ou 3, **caractérisé en ce que** dans le logement sont intégrées d'autres fonctions de commutation en plus des fonctions de commutation de l'interrupteur en forme de bâton proprement dit, fonctions qui peuvent être déclenchées au moyen d'éléments d'actionnement supplémentaires prévus sur la partie en forme de bâton (3) et/ou sur la partie d'actionnement (5).

5. Interrupteur en forme de bâton selon l'une des revendications précédentes, **caractérisé en ce que** la partie d'actionnement (5) est conçue au moins en deux parties, tandis qu'il est prévu une partie de tête (5b) qui forme un logement au moins pour la partie mécanique d'autres fonctions de commutation prédéterminées.

6. Interrupteur en forme de bâton selon l'une des revendications précédentes, **caractérisé en ce que** dans la partie d'actionnement (5), il est prévu une platine (23) pour le regroupement des fonctions de commutation électriques du commutateur en forme de bâton (1) et au besoin, des autres fonctions de commutation.

7. Interrupteur en forme de bâton selon la revendication 6, **caractérisé en ce que** les connexions électriques nécessaires des contacts (15a,15b,17a,17b) pour la réalisation des fonctions de commutation de l'interrupteur en forme de bâton (1) et des autres fonctions de commutation sont raccordées par une conduite de connexion au moins partiellement flexible (27) aux contacts de connexion électriques (25) dans la zone enfichable (3a) du commutateur en forme de bâton (1).

8. Interrupteur en forme de bâton selon l'une des revendications précédentes, **caractérisé en ce que**, dans la partie de réception ou en un autre emplacement quelconque il est prévu une unité d'évaluation et de commande qui évalue les courants de commande et/ou les positions de commutation des contacts de commutation dans la partie en forme de bâton (3) et/ou dans la partie d'actionnement (5) et réalise des fonctions de commutation prédéterminées.

9. Interrupteur en forme de bâton selon la revendication 8, **caractérisé en ce qu'**il est prévu une unité d'évaluation et de commande dans un logement séparé ou dans un logement pouvant être fixé dans la partie de réception, et qui est conçu pour recevoir la zone enfichable (9a) de la partie en forme de bâton (3).

10. Interrupteur en forme de bâton selon l'une des revendications précédentes, **caractérisé en ce que** dans la zone enfichable (3a) sont prévus des premiers moyens de maintien (31) qui, avec des seconds moyens de maintien prévus dans la partie de réception, coopèrent pour le maintien essentiellement rigide et au besoin, pour le verrouillage de l'interrupteur en forme de bâton (1) dans la partie de réception.

11. Interrupteur en forme de bâton selon l'une des revendications précédentes, **caractérisé en ce que** dans la zone enfichable (3a) sont prévus des moyens pour le guidage et la protection anti-torsion et le maintien de l'interrupteur en forme de bâton (1) dans la partie de réception.
